# EUROPEAN PATENT APPLICATION

(11) **EP 3 086 266 A1**
(43) Date of publication of application: **26.10.2016**
(21) Application number: 16165190.6
(22) Date of filing: 13.04.2016
(51) Int. Cl.: G06Q 10/06, G06Q 50/04

(54) **SYSTEMS AND METHODS FOR COLLECTING LINE REPLACEABLE UNIT REMOVAL DATA**

(30) Priority: 22.04.2015 US 201514693343
(71) Applicant: Honeywell International Inc., Morris Plains, NJ 07950 (US)
(72) Inventor: HOSAMANE, Somashekhar M Maheswarappa, Morris Plains, NJ New Jersey 07950 (US); SICZ, Michael, Morris Plains, NJ New Jersey 07950 (US); VARGHESE, Betsy, Morris Plains, NJ New Jersey 07950 (US); HARIDAS, Manoj, Morris Plains, NJ New Jersey 07950 (US); MUNSHI, Imrankhan, Morris Plains, NJ New Jersey 07950 (US); M, Lakshmanan, Morris Plains, NJ New Jersey 07950 (US)
(74) Representative: Houghton, Mark Phillip

(57) **Abstract**

Systems and methods are provided for collecting line replaceable unit removal data. The system includes an identifying tag for a line replaceable unit (LRU). The identifying tag has a plurality of LRU information including an LRU identifier and removal data corresponding to the LRU. The system further includes a scanning device configured to obtain the LRU information from the identifying tag. A local database is configured to receive the plurality of LRU information from the scanning device and to generate an LRU statistics based on the removal data. A remote database is configured to acquire and store the LRU statistics generated by the local database.

## Description

### TECHNICAL FIELD

The present invention generally relates to data collection and entry, and more particularly to the automated collection of part / line replaceable unit (LRU) removal data.

### BACKGROUND

Conventionally, a failed part / LRU may be replaced in the field either by a field service engineer (FSE) or a maintenance repair and overhaul (MRO) shop. The removed & replaced part numbers and removal details associated with the part are typically noted in a job sheet and collected in a single place for entry into a database either by the FSE or by a maintenance in-charge in MRO shops. Exemplary removal data includes an LRU serial number, manufacturing date, installation date, version number, etc.The removal details are often received for entry in different digital formats such as spread sheets, word documents, PDFs etc. or hard copy entries on paper. These job sheets are then collected by original equipment manufacturers (OEMs) and stored in databases to generate reports, analyze part / LRU performance, and other statistics useful to the OEM.

The OEMs may communicate with FSEs and MROs based on the data obtained from the job sheets to improve LRU replacement speed or other maintenance procedures. Furthermore, an owner / customer of the apparatus (e.g., vehicle, machine, equipment, assembly, device, etc.) being serviced by the FSE or MRO has an interest in having the service performed quickly and efficiently. However, due to the manual process of collecting and entering the job sheet information from different FSEs and MRO shops, OEMs may experience prolonged delays between the time when the data is entered on the job sheet and the time when the OEM actually receives the job sheet data in their databases. In addition, data entry errors when creating or entering data into the job sheets can lead to compromised data.

Accordingly, it is desirable to provide systems and methods for collecting LRU removal data. Other desirable features and characteristics of the present invention will become apparent from the subsequent detailed description and the appended claims, taken in conjunction with the accompanying drawings and the foregoing technical field and background.

### BRIEF SUMMARY

Various embodiments of a system for collecting line replaceable unit removal data and a method for collecting line replaceable unit removal data are disclosed herein.

In one embodiment, the system for collecting line replaceable unit removal data includes an identifying tag for a line replaceable unit (LRU). The identifying tag has a plurality of LRU information including an LRU identifier and removal data corresponding to the LRU. The system further includes a scanning device configured to obtain the LRU information from the identifying tag. A local database is configured to receive the plurality of LRU information from the scanning device and to generate an LRU statistics based on the removal data. A remote database is configured to acquire and store the LRU statistics generated by the local database.

In another embodiment, the method for collecting line replaceable unit removal data includes providing an identifying tag for a line replaceable unit (LRU) having a plurality of LRU information corresponding to the LRU including an LRU identifier and removal data. The method includes scanning the identifying tag with a scanning device, obtaining the LRU information based on the scan of the identifying tag, and updating a local database with the LRU information from the scanning device. The method further includes generating, with the local database, a plurality of LRU statistics based on the removal data and updating a remote database with the LRU statistics.

### BRIEF DESCRIPTION OF THE DRAWINGS

The exemplary embodiments will hereinafter be described in conjunction with the following drawing figures, wherein like numerals denote like elements, and wherein:
FIG. 1 is a schematic representation of the system for collecting LRU removal data in accordance with an exemplary embodiment;
FIG. 2 is a schematic representation of the system for collecting LRU removal data in accordance with another exemplary embodiment;
FIG. 3 is a schematic representation of the system for collecting LRU removal data in accordance with another exemplary embodiment;
FIG. 4 is a flow chart illustrating a method for collecting LRU removal data with the systems shown in FIGS. 1-3;
FIG. 5 is a flow chart illustrating a method for collecting LRU removal datain accordance with another exemplary embodiment; and
FIG. 6 is a flow chart illustrating a method for collecting LRU removal datain accordance with another exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

It should be understood that throughout the drawings, corresponding reference numerals indicate like or corresponding parts and features. As used herein, the term module refers to any hardware, software, firmware, electronic control component, processing logic, and/or processor device, individually or in any combination, including without limitation: application specific integrated circuit (ASIC), an electronic circuit, a processor module (shared, dedicated, or group) and memory module that executes one or more software or firmware programs, a combinational logic circuit, and/or other suitable components that provide the described functionality.

Referring to the Figures, a system 10 for collecting LRU removal data is shown herein. The system 10 includes an identifying tag 20 for a LRU 22. The identifying tag 20 has a plurality of LRU information 30 including an LRU identifier 32 and removal data 34 corresponding to the LRU 22. The system 10 further includes a scanning device 40 configured to obtain the LRU information 30 from the identifying tag 20. A local database 50 is configured to receive the plurality of LRU information 30 from the scanning device 40 and to generate an LRU statistics 52 based on the removal data 34. A remote database 60 is configured to acquire and store the LRU statistics 52 generated by the local database 50.

In a non-limiting embodiment, a line replaceable unit (LRU) is a modular component of a vehicle that is designed to be replaced quickly. The term vehicle includes airplanes, automobiles, spacecraft, ships, etc. The LRU is designed by the manufacturer to be easily interchanged by a field service engineer (FSE) or a maintenance repair operation (MRO). An exemplary FSE includes an on-site maintenance technician such as an airplane mechanic at a hanger or a car mechanic at a car repair shop. An exemplary MRO is a facility equipped to handle maintenance procedures that cannot be handled by the FSE due to the size of the procedure, the sophistication of the procedure, availability of replacement LRUs, etc.

One skilled in the art will appreciate that many different types of LRUs are found in vehicles. As LRUs are designed to be replaced during maintenance events throughout the lifetime of the vehicle, it is in the interest of the original manufacturer to collect data relating to LRUs that are removed from vehicles by FSEs and MROs. The data collected from the LRUs may allow original manufacturers to improve LRU manufacturing techniques, reduce maintenance turnaround times, and provide FSEs and MROs with improved removal instructions.

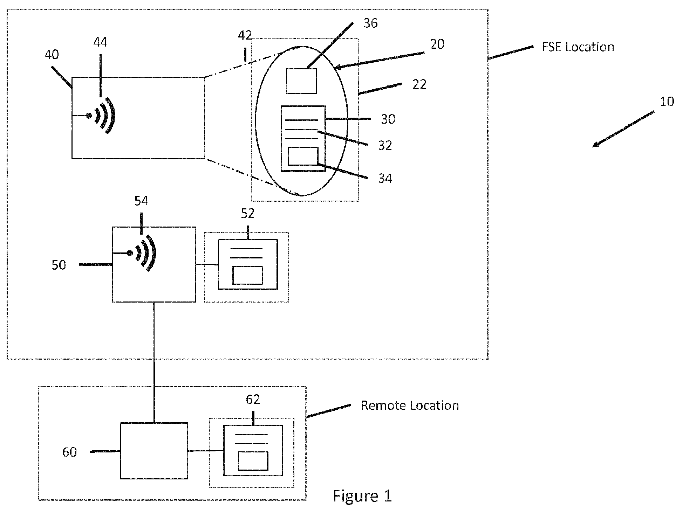

In the non-limiting embodiment of FIG. 1, the LRU 22 includes an identifying tag 20. In a preferred embodiment, the identifying tag 20is a radio frequency identification (RFID) tag. The RFID tag contains electronically stored LRU information 30 that is read by the scanner 40. The LRU information 30 may include an LRU identifier 32 that provides the FSE with information relating to the LRU. An exemplary LRU identifier 32 includes an LRU part number.

The identifying tag 20 further includes removal data 34 corresponding to the LRU 22. The removal data 34 may be additional information relating to the LRU that is of interest to the original manufacturer. Exemplary removal data 34 includes an LRU serial number, manufacturing date, installation date, version number, etc.

The scanning device 40 is configured to obtain the LRU information 30 from the identifying tag 20. In the preferred embodiment of FIG. 1, the scanning device 40 is a radio frequency (RF) scanning device. The scanning device 40 emits radio waves 42 at the identifying tag 20 of the LRU 22. The identifying tag 20 collects the radio waves 42 and acts as a passive transponder to allow the scanning device 40 to obtain the LRU information 30. One advantage of using an RFID identifying tag 20 and a RF scanning device 40 is that the identifying tag 20 does not have to be within a line of sight of the scanning device 40. In this way, the identifying tag 20 of the LRU 22, or even the LRU 22 itself, may be embedded in the vehicle.

The scanning device 40 further includes a communication module 44. The communication module 44 is configured to transmit and receive a plurality communication signals between the scanning device 40 and the local database 50. In a non-limiting example, the communication module 44 communicates with the local database 50 over a wireless communication channel using a protocol such as Bluetooth. One skilled in the art will appreciate that other wireless protocols such as Wi-Fi, ZigBee, etc. or mobile data networks such as cellular networks may be used depending on the scanning device 40 used.

The local database 50 is configured to receive the LRU information 30 from the scanning device 40 and generate an LRU statistics 52 based on the removal data 34. In a non-limiting embodiment, the local database 50 is local relative to the FSE, has a communication interface 54, and is in communication with the scanning device 40 via the communication interface 54 and the communication module 44. One skilled in the art will appreciate that while the wireless communication channel is depicted, the local database 50 and scanning device 40 may be in communication via a direct wired connection or through an intermediary connection such as a local network or internet connection.

The local database 50 collects the LRU information 30 and generates the LRU statistics 52 based on the removal data 34. The LRU statistics 52 may be a standardized digital form that contains the removal data 34 corresponding to a plurality of LRUs 22 removed from a vehicle or multiple vehicles. For example, the LRU statistics 52 may contain the removal data 34 of all LRUs 22 removed over a specific time period or during a single maintenance event.

The remote database 60 is configured to acquire and store the LRU statistics 52 generated by the local database 50. In a preferred embodiment, the remote database 60 collects LRU statistics 52 from a plurality of local databases 50 so that the original manufacturer is provided with the maximum amount of removal data 34. In a preferred embodiment, the remote database 60 is in communication with the local database 50 via a network connection such as an internet connection to allow the remote database 60 and the local database 50 to automatically communicate with one another.

In this way, the system 10 enables LRU information 30 to be accurately and quickly communicated from the FSE to the remote database 60 without the need for manual collection and entering of job sheet information. The LRU information 30 obtained by the scanning device 40 is automatically communicated from the local database 50 to the remote database 60 without the introduction of human error or the addition of time associated with manual data entry.

In another embodiment of the system 10, the remote database 60 is configured to generate an LRU report 62 based on the LRU statistics 52. The LRU report 62 may be a large scale statistical analysis of LRU statistics 52 obtained from a plurality of local databases 50 containing any number of LRU removal data 34. One skilled in the art will appreciate that original manufactures may perform a number of statistical evaluations with LRU information 30 and therefore have an interest in collecting large numbers of accurate LRU information 30 as quickly as possible. The types of evaluations performed by the original manufacturers are not contemplated by the present disclosure.

In another embodiment of the system, the LRU information includes the vehicle identification 36. The type of vehicle identification 36 is specific to the type of vehicle. For example, the vehicle identification 36 for an airplane may include a tail number while the vehicle identification 36 for an automobile may include a vehicle identification number (VIN) as is known to those skilled in the art. The vehicle identification number 36 may also include a vehicle operator and a vehicle type. If the vehicle is a fleet vehicle such as an airplane or a rental car, the vehicle operator may relate to the company that purchases or maintains the vehicle.

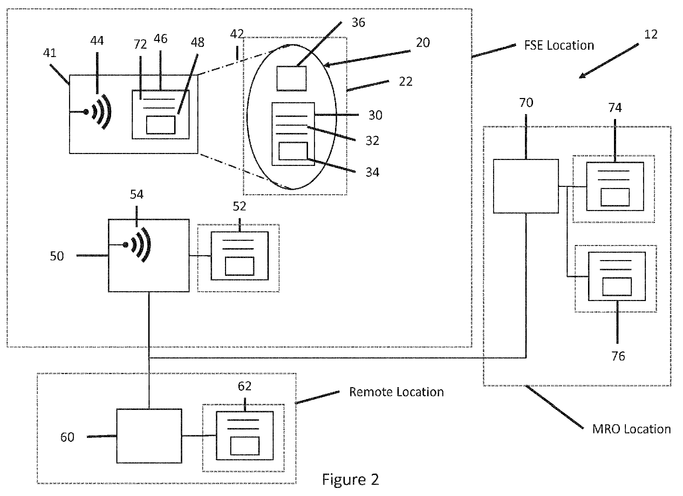

With reference now to FIG. 2, an embodiment of a system 12 for collecting line replaceable unit removal data is provided. In this embodiment, the system 12 includes a scanning device 41 with a display device 46 and a manufacturing repair operations (MRO) database 70. With continuing reference to FIG. 1, as similar components are used in the system 12 relative to the system 10, similar reference numerals will be used.

Similar to the system 10 of FIG. 1, the system 12 includes the identifying tag 20, the local database 50, and the remote database 60. The system 12 also includes a scanning device 41 having the communication module 44 and a display device 46 as well as an MRO database 70. The display device 46 is configured to display an LRU removal instruction 48 based on the removal data 34. In a preferred embodiment, the display device 46 is incorporated into the scanning device 41, however, one skilled in the art will appreciate that the display device 46 may be a separate device such as a desktop computer, notebook computer, handheld device, mobile phone, etc.

In a non-limiting embodiment, the display device is a liquid-crystal display (LCD) and the LRU removal instruction 48 is displayed by the display device 46 so as to be visible by the FSE. The LRU removal instruction 48 may include various types of information such as technical information, procedural information, instructions, etc. relating to the LRU 22. The removal instruction 48 may also include graphical information relating to the LRU 22. In a non-limiting embodiment the graphical information includes pictures, graphs, videos, etc. relating to the LRU 22. The removal instruction 48 may also include a combination of both textual information and graphical information relating to the LRU 22.

As detailed above, the MRO may be equipped to handle specific maintenance and LRU removal procedures that cannot be handled locally by the FSE. As such, it is beneficial for the display device 46 to display a plurality of MRO information 72. In a non-limiting embodiment, the MRO information 72 includes a projected service time, an LRU stock count, an MRO distance, and an MRO service capability. Displaying the MRO information 72 to the FSE allows for the selection of the MRO based on the MRO information 72. Selecting the MRO in this way may improve turnaround time, reduce freight and shipping costs, and allow MROs to manage inventory and work load.

In another embodiment, the MRO database 70 stores an MRO removal statistic 74. In this embodiment, the LRU statistics 52 acquired by the remote database 60 includes the MRO removal statistic 74. Similar to the LRU statistics 52, the MRO removal statistics 74 may be a standardized digital form that contains the removal data 34 corresponding to the LRUs 22 removed from a vehicle or multiple vehicles by the MRO. For example, the MRO removal statistics 74 may contain the removal data 34 of all LRUs 22 removed over a specific time period or during a single maintenance event. In this way, the LRU report 62 incorporates data from both local databases 50 and MRO databases 70.

In another embodiment, the MRO database 70 is configured to receive a service request 76 for the LRU 22 from the FSE. The service request 76 may include the LRU information 30 and put the MRO on notice of an incoming service event from the FSE. The service request 76 may enable the MRO to order parts, if necessary, and budget time accordingly to ensure that the service request 76 is completed efficiently. The service request 76 may also provide the MRO and the MRO database 70 with further documentation to be incorporated into the MRO removal statistics 74.

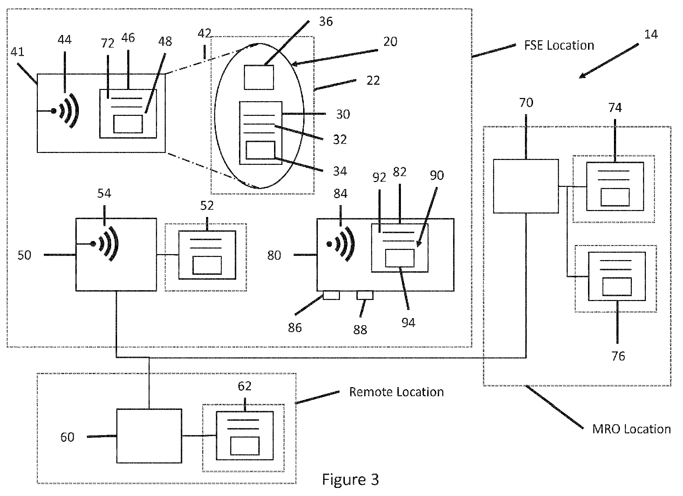

With reference now to FIG. 3, an embodiment of a system 14 for collecting line replaceable unit removal data is provided. In this embodiment, the system 14 includes a smart maintenance too180 configured to display an LRU service guide 90 based on the LRU information 30. With continuing reference to FIGS. 1-2, as similar components are used in the system 14 relative to the systems 10, 12, similar reference numerals will be used.

The smart maintenance too180 includes a display 82 and a wireless communication interface 84. The smart maintenance too180 further includes an audio output device 86 and an auxiliary display output 88. The smart maintenance tool 80 is configured to provide the FSE with the LRU service guide 90 based on the LRU information 30. The LRU service guide 90 may include a combination of textual instructions 92 and graphical instructions 94 to help the FSE perform the LRU removal.

The service guide 90 may include audible instructions provided to the FSE with the audio output device 86 via headphones or a speaker. The service guide 90 may include visual instructions provided to the FSE with the display 82 or via the auxiliary display output 88 to an alternative display such as a headset.

The smart maintenance tool 80 may further be incorporated with the scanning device 40 so that when the FSE scans the identifying tag 20 of the LRU 22, the smart maintenance tool 80 is automatically provided with the appropriate LRU service guide 90 without any further action from the FSE.

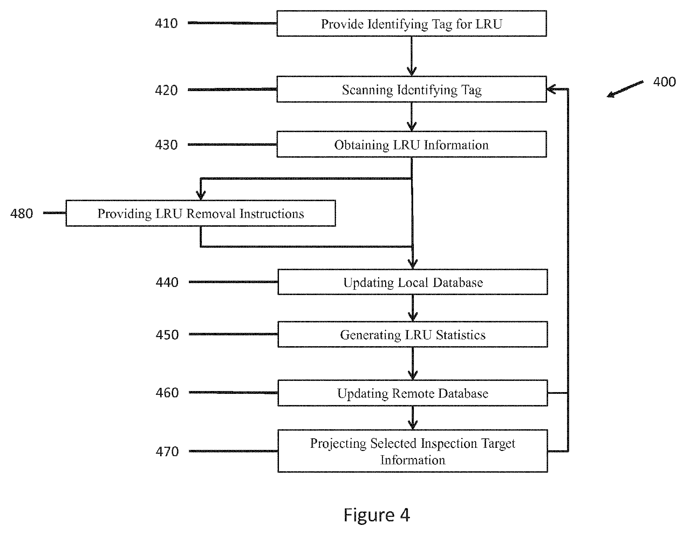

Referring now to FIG. 4, and with continued reference to FIGS. 1-3, a flowchart illustrates a method 400 performed by the systems 10, 12, 14 of FIGS. 1-3 in accordance with the present disclosure. As can be appreciated in light of the disclosure, the order of operation within the method 400 is not limited to the sequential execution as illustrated in FIG. 4, but may be performed in one or more varying orders as applicable and in accordance with the requirements of a given application.

In various exemplary embodiments, the systems 10, 12, 14 and method 400 are operated based on predetermined events, such as a scanning of the identifying tag 20. Method 400 may be performed by the systems 10, 12, 14 or may be performed by any other suitable device or system configured in a manner consistent with the teachings of the present disclosure. Unless otherwise noted, the method 400 may be performed by any of the systems 10, 12, 14, previously described above.

The method 400 starts at block 410 providing an identifying tag 20 for a line replaceable unit 22. As detailed above, the identifying tag 20 has a plurality of LRU information 30 corresponding to the LRU 22 including an LRU identifier 32 and removal data 34. At block 420, a scanning device 40 scans the identifying tag 20 and at block 430, the LRU information 30 is obtained based on the scan of the identifying tag 20.

At block 440, a local database 50 is updated with the LRU information 30 from the scanning device 40. At block 450, the local database 50 generates a plurality of LRU statistics 52 based on the removal data 34 and at block 460, a remote database 60 is updated with the LRU statistics 52 generated by the local database 50. Following block 460, the method 400 returns to block 420 as necessary until another identifying tag 20 is scanned.

In this way, the method 400 collects LRU removal data 34 by providing the identifying tag 20 for the LRU 22 and scanning the identifying tag 20 with the scanning device 40. The LRU information 30 is obtained by the scanning device 40 based on the scan of the identifying tag 20 and the local database 50 is updated with the LRU information 30. The local database 50 generates the LRU statistics 52 based on the removal data 34 and updates the remote database 60 with the LRU statistics 52.

In one embodiment, the method 400 further includes block 470 in which an LRU report 62 is generated by the remote database 60 based on the LRU statistics 52. The LRU report 62 may be automatically generated according to a predetermined event such as an update to the remote database 60 or according to the original manufacturer's design parameters. Following block 470, the method 400 returns to block 420 as necessary until another identifying tag 20 is scanned.

In one embodiment, the LRU information 30 obtained at block 430 of the method 400 includes a vehicle identification 36. As detailed above, the type of vehicle identification 36 is specific to the type of vehicle. The vehicle identification number 36 may also include a vehicle operator and a vehicle type. If the vehicle is a fleet vehicle such as an airplane or a rental car, the vehicle operator may relate to the company that purchases or maintains the vehicle.

In one embodiment, the method 400 further includes block 480 in which an operator is provided with an LRU removal instruction 48.The LRU removal instruction 48 may include various types of information such as technical information, procedural information, instructions, etc. relating to the LRU 22. The removal instruction 48 may include a combination of both textual information and graphical information relating to the LRU 22. Following block 480, the method 400 proceeds to block 440 and updates the local database 50.

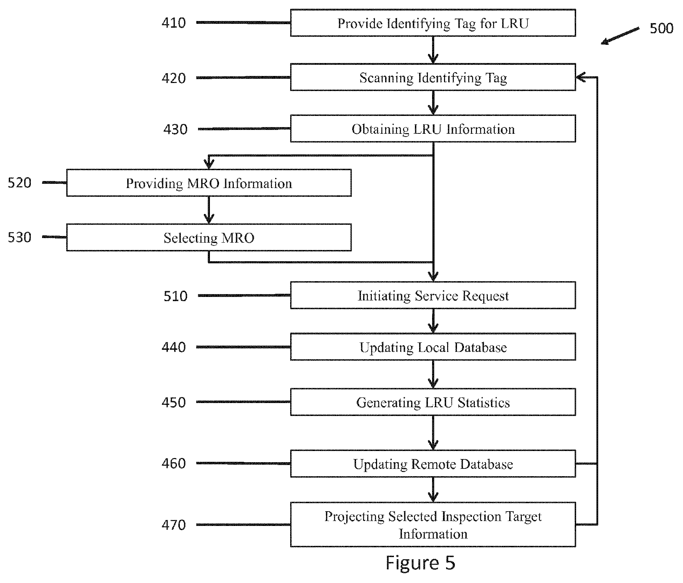

Referring now to FIG. 5, and with continued reference to FIGS. 2-4, a flowchart illustrates a method 500 performed by the systems 12, 14 of FIGS. 2-3 in accordance with the present disclosure. As can be appreciated in light of the disclosure, the order of operation within the method 500 is not limited to the sequential execution as illustrated in FIG. 5, but may be performed in one or more varying orders as applicable and in accordance with the requirements of a given application.

In one embodiment, relative to the method 400, the method 500 may further include block 510 in which an operator initiates a service request 76 for the LRU 22 with a maintenance repair operation (MRO). In another embodiment, the method 500 includes block 520 in which the operator is provided with a plurality of MRO information 72 and block 530 in which an MRO is selected based on the MRO information 72. As detailed above, the MRO information 72 includes a projected service time, an LRU stock count, an MRO distance, and an MRO service capability. Displaying the MRO information 72 to the FSE allows for the selection of the MRO based on the MRO information 72. Selecting the MRO in this way may improve turnaround time, reduce freight and shipping costs, and allow MROs to manage inventory and work load. Following the initiation of the service request 76 at block 510, the method 500 proceeds to block 440 and updates the local database 50.

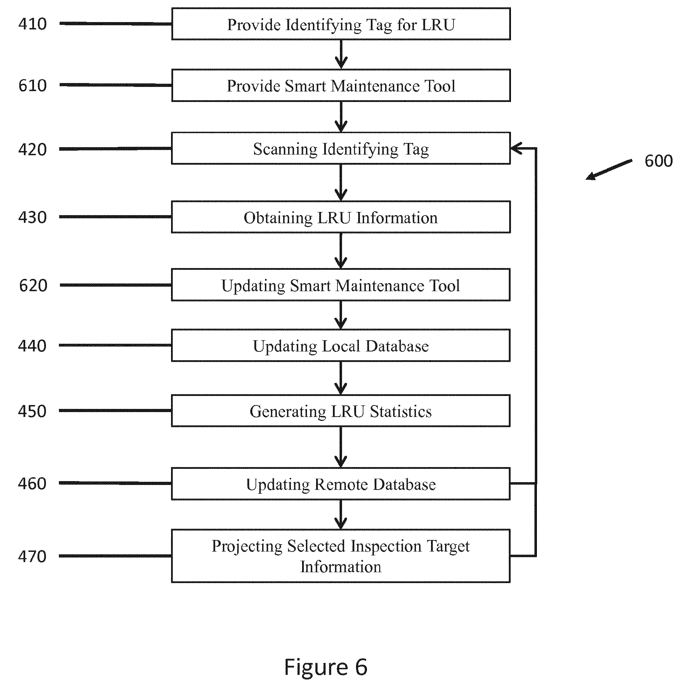

Referring now to FIG. 6, and with continued reference to FIGS. 3-5, a flowchart illustrates a method 600 performed by the system 14 of FIG. 3 in accordance with the present disclosure. As can be appreciated in light of the disclosure, the order of operation within the method600 is not limited to the sequential execution as illustrated in FIG. 6, but may be performed in one or more varying orders as applicable and in accordance with the requirements of a given application.

In one embodiment, relative to the methods 400, 500, the method 600 may further include block 610 in which an operator is provided with a smart maintenance tool 80. At block 620 the smart maintenance tool 80 is updated with an LRU service guide 90 based on the LRU information 30. As detailed above, the service guide 90 may include audible instructions provided to the FSE with the audio output device 86 via headphones or a speaker. The service guide 90 may include visual instructions provided to the FSE with the display 82 or via the auxiliary display output 88 to an alternative display such as a headset.

The smart maintenance tool 80 may further be incorporated with the scanning device 40 so that when the FSE scans the identifying tag 20 of the LRU 22, the smart maintenance tool 80 is automatically provided with the appropriate LRU service guide 90 without any further action from the FSE.Following the updating of the smart maintenance tool 80 at block 620, the method 600 proceeds to block 440 and updates the local database 50.

In the non-limiting exemplary embodiments, the identifying tag 20 is an RFID tag. However, the identifying tag 20 may be implemented and/or utilized in conjunction with other types of identifying tags 20. For instance, other identifying tags 20 include, but are not limited to, bar codes, quick response (QR) codes, or smart labels. One skilled in the art will appreciate that smart labels may include electronic codes such as microchips, antennas, or RF tags that along with any number or combination of optical tags such as bar codes, QR codes, color codes, or UV codes.

Other embodiments the scanning device 40, 41 include: an infra-red camera module capable of obtaining infra-red photos and/or video of the identifying tag 20; a radar module capable of obtaining surface and shape data of the identifying tag 20; a sonar module capable of obtaining surface and shape data of the identifying tag 20; a code scanning module capable of reading a code or other identifying serial information; and/or combination thereof.

In the non-limiting exemplary embodiments, the scanning devices 40, 41 are selected based on the parameters of the identifying tags 20. For example, a scanning device 40 having RF capability would be used with an RFID identifying tag 20 while a scanning device 40 having a bar code reader would be used with a bar code identifying tag 20. One skilled in the art will appreciate that scanning devices 40, 41 incorporating multiple scanning capabilities are contemplated by the present disclosure.

While not depicted in the schematic representations throughout the figures, one skilled in the art will appreciate that the scanning devices include power sources such as batteries, electronic control modules, physical buttons, etc, which are not depicted herein. The omission of these components should not detract from the understanding of the present disclosure.

In the non-limiting exemplary embodiments, the local database 50, the remote database 60, and the MRO database 70 may be implemented and/or utilized in conjunction with a computer ora network. One skilled in the art will appreciate that the databases 50, 60, 70 include at least a processor module and a memory module.

One skilled in the art will appreciate that the depiction of the systems 10, 12, 14 and the various components are merely exemplary and are not limiting with respect to size of the components or location within the systems 10, 12, 14. Thus, the present disclosure is not limited to any specific layout and the systems 10, 12, 14 may include additional electronic components not shown in its implementation.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set-forth in the appended claims.

## Claims

1. A system for collecting line replaceable unit removal data, comprising:
an identifying tag for a line replaceable unit (LRU), the identifying tag having a plurality of LRU information including an LRU identifier and removal data corresponding to the LRU;
a scanning device configured to obtain the LRU information from the identifying tag;
a local database configured to receive the plurality of LRU information from the scanning device, the database configured to generate an LRU statistics based on the removal data; and
a remote database configured to acquire and store the LRU statistics generated by the local database.

2. The system of claim 1, wherein the remote database is configured to generate an LRU report based on the LRU statistics.

3. The system of claim 1, wherein the LRU information includes a vehicle identification.

4. The system of claim 1, further comprising a display device configured to display an LRU removal instruction based on the removal data.

5. The system of claim 4, wherein the display device is configured to display a plurality of maintenance repair operation (MRO) information.

6. The system of claim 5, wherein the MRO information includes at least a projected service time, a LRU stock count, an MRO distance, and an MRO service capability.

7. The system of claim 1, wherein the LRU statistics include an MRO removal count.

8. The system of claim 1, further comprising a maintenance repair operation (MRO) database configured to receive a service request for the LRU.

9. The system of claim 1, further comprising a smart maintenance tool configured to display a LRU service guide based on the LRU information.

10. The system of claim 1, wherein the identifying tag is selected from the group comprising a bar code, a radio frequency identification (RFID), a quick response (QR) code, and a smart label.

11. A method for collecting line replaceable unit removal data, comprising:
providing an identifying tag for a line replaceable unit (LRU), the identifying tag having a plurality of LRU information corresponding to the LRU including an LRU identifier and removal data;
scanning the identifying tag with a scanning device;
obtaining the LRU information based on the scan of the identifying tag;
updating a local database with the LRU information from the scanning device, generating, with the local database, a plurality of LRU statistics based on the removal data; and
updating a remote database with the LRU statistics.

12. The method of claim 11, further comprising generating an LRU report with the remote database based on the LRU statistics.

13. The method of claim 11, further comprising initiating, by an operator, a service request for the LRU with a maintenance repair operation (MRO).

14. The method of claim 13, further comprising:
providing the operator with a plurality of MRO information; and
selecting the MRO based on the MRO information.

15. The method of claim 11, further comprising:
providing a smart maintenance tool; and
updating the smart maintenance tool with an LRU service guide based on the LRU information.
